# EUROPEAN PATENT SPECIFICATION

(11) **EP 2 413 207 B1**
(45) Date of publication and mention of the grant of the patent: **03.07.2019**
(21) Application number: 10173984.5
(22) Date of filing: 25.08.2010
(51) Int. Cl.: G05B 19/042, H04L 1/00

(54) **Data encoding and decoding for an industrial process control system**
Datenkodierung und -dekodierung für eine Industrieprozessteuerung
Codage et décodage de données d'un système de contrôle industriel

(30) Priority: 29.07.2010 US 368687 P
(43) Date of publication of application: 01.02.2012
(73) Proprietor: Rockwell Automation Limited, Milton Keynes Buckinghamshire MK11 3DR (GB)
(72) Inventor: Creech, Gerald, Danbury, Cambridgeshire CM3 4DE (GB); Meagher, Thomas, Houston,, TX 77084 (US); Murrell, Shelby, Dripping Springs, TX 78620 (US)
(74) Representative: Williams, Michael David

(56) References cited:
- EP-A1- 1 988 655
- US-A1- 2007 242 614
- US-A1- 2008 109 677
- US-B1- 6 631 476
- J. Black and P. Koopman: "Critical Message Integrity Over A Shared Network", , 15 June 2003 (2003-06-15), Retrieved from the Internet: URL:http://repository.cmu.edu/cgi/viewcont ent.cgi?article=1676&context=isr [retrieved on 2015-10-19]
- Freescale Semiconductor: "Using the CRC Module on the Flexis AC Family", , 1 April 2009 (2009-04-01), Retrieved from the Internet: URL:http://cache.freescale.com/files/micro controllers/doc/app_note/AN3795.pdf [retrieved on 2015-10-19]
- Aerocom: "Aerocom CL4490-1000 Industrial 900 MHz ConnexLink User's Manual Version 1.4", , 10 March 2005 (2005-03-10), Retrieved from the Internet: URL:https://upverter.com/datasheet/ba51ff9 d9c6d43d0a15fd17a39eb7d860369604d.pdf [retrieved on 2015-10-19]

## Description

### BACKGROUND

### a. Field of the Invention

This invention relates to data encoding and decoding for an Industrial Process Control System in particular for an Industrial Process Control System Suitable for:
Emergency Shutdown systems
Critical process control systems
Fire and Gas detection and protection systems
Rotating machinery control systems
Burner management systems
Boiler and furnace control systems
Distributed monitory and control systems

Such control systems are applicable to many industries including oil and gas production and refining, chemical production and processing, power generation, paper and textile mills and sewage treatment plants.

### b. Related Art

In industrial process control systems, fault tolerance is of utmost importance. Fault tolerance is the ability to continue functioning safely in the event of one or more failures within the system. Fault tolerance is usually categorised in accordance with a safety integrity level (SIL) scale where a higher SIL means a better safety performance. SILs are defined in standards IEC 61508 (Functional safety of electrical/electronic/programmable electronic safety-related systems) and specifically for the process industry in IEC 61511 (Functional safety - Safety instrumented systems for the process industry sector).

Fault tolerance may be achieved by a number of different techniques, each with its specific advantages and disadvantages

An example of a system which provides redundancy is a Triple Modular Redundancy (TMR) system. Using TMR, critical circuits are triplicated and perform identical functions simultaneously and independently. The data output from each of the three circuits is voted in a majority-voting circuit, before affecting the system's outputs. If one of the triplicated circuits fails, its data output is ignored. However, the system continues to output to the process the value (voltage, current level, or discrete output state) that agrees with the majority of the functional circuits. TMR provides continuous, predictable operation.

However, TMR systems are expensive to implement if full TMR is not actually a requirement, and it is desirable to utilise an architecture which provides flexibility so that differing levels of fault tolerance can be provided depending upon specified system requirements.

Another approach to fault tolerance is the use of hot-standby modules. This approach provides a level of fault tolerance whereby the standby module maintains system operation in the event of module failure. With this approach there may be some disruption to system operation during the changeover period if the modules are not themselves fault-tolerant.

Fault tolerant systems ideally create a Fault Containment Region (FCR) to ensure that a fault within the FCR boundary does not propagate to the remainder of the system. This enables multiple faults to co-exist on different parts of a system without affecting operation.

Fault tolerant systems generally employ dedicated hardware and software test and diagnostic regimes that provide very fast fault recognition and response times to provide a safer system.

Safety control systems are generally designed to be 'fail-operational/fail-safe'. Fail operational means that when a failure occurs, the system continues to operate: it is in a fail-operational stage. The system should continue to operate in this stage until the failed module is replaced and the system is returned to a fully operational state.

An example of fail safe operation occurs, for example if, in a TMR system, a failed module is not replaced before a second failure in a parallel circuit occurs, the second failure should cause the TMR system to shut down to a fail-safe state.

There is a need for safety critical data which is transmitted between modules in an Industrial Control System to be encoded such that errors which may be introduced into the communications channel do not affect the safety integrity level of the system.

US 2007/0242614 describes a method for transmitting data packets on a data transmission link between two communication subscribers. The data packets respectively contain a check character which is calculated from the other data in the data packet.

J. Black and P. Koopman, "Critical Message Integrity Over A Shared Network", 15 June 2003, describes the use of lightweight digital signatures based on CRCs for critical processes. Both symmetric and asymmetric key digital signatures based on CRCs form parts of the cost/performance tradeoff space to improve critical message integrity.

Freescale Semiconductor Application Note, "Using the CRC Module On the Flexis AC Family", describes that the incorporation of a cyclic redundancy check module within the Flexis AC family provides a mechanism for users to verify, that their program data has not been corrupted.

AeroComm, "CL4490-1000 Industrial 900MHz ConnexLink User's Mannual", version 1.4, describes that a System ID is used in conjunction with a Channel Number and serves as an RF password to maintain secure transfers of data. The combination of the Channel Number and System ID must be unique to each network of CL4490s to establish communication. Multiple Servers in the same coverage area must be programmed with different Channel Numbers to prevent inoperability of the networks. The System ID will not prevent inoperability that occurs from locating multiple Servers with the same Channel Number in the same coverage area.

### SUMMARY OF THE INVENTION

According to the invention there is provided an apparatus for industrial process control according to claim 1 and a method for industrial process control according to claim 13.

Preferably an assembly receiving data from another assembly is arranged to compare the received checksum with a calculated checksum using a seed which is uniquely dependent upon the expected source or destination input/output assembly and to discard received data where the received checksum does not match the calculated checksum.

In one embodiment the source assembly is a processor assembly and the destination assembly is an input/output assembly.

In another embodiment the source assembly is an input assembly and the destination assembly is a processor assembly.

The seed comprises an input or output channel number, such channel numbers may be allocated when an input or output channel is configured.

In a preferred embodiment the checksum is a cyclic redundancy code.

In one embodiment of the invention an output assembly is arranged to determine the number of processors which are connected and active and in the event that three processors are connected and active and the output assembly receives valid data from a first and second processor then if first data from the first processor and second data from the second processor agree the data is considered valid otherwise the data is considered invalid.

Preferably, in the event that two processors are connected and active and the output assembly receives valid data from a first and second processor then if first data from the first processor and second data from the second processor agree the data is considered valid and even more preferably the fist data and second data must arrive within a predetermined time frame to be considered valid otherwise the data is considered invalid.

### BRIEF DESCRIPTION OF THE DRAWINGS

Embodiments of the invention will now be described, by way of example only, with reference to the accompanying drawings, in which:
Figure 1 is an illustration showing the architecture of a distributed industrial process control system which uses the apparatus and method of the present invention;
Figure 2 illustrates schematically a controller of the industrial process control system illustrated in Figure 1;
Figure 3 illustrates a possible configuration of a controller;
Figure 4 shows various options for an input assembly and output assembly of Figure 3;
Figure 5 shows one possible configuration implementing a two out of three voting strategy;
Figure 6 illustrates a second possible configuration for a two out of three voting strategy;
Figure 7 illustrates one possible interconnection scheme;
Figure 8 is a schematic illustration showing an input module; and
Figure 9 is a diagram of an input channel.

### DETAILED DESCRIPTION

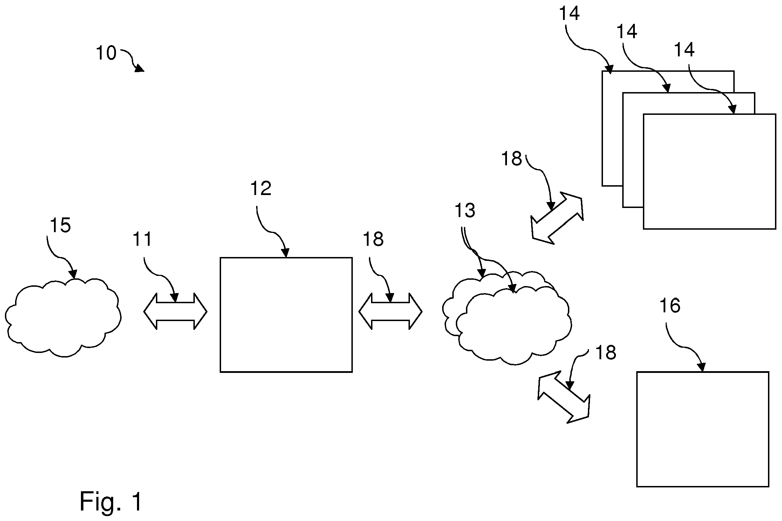

In the Industrial Process Control System shown in Figure 1, a distributed architecture is designed to be used in different SIL (safety integrity level) environments, so that if a high SIL is required it can be provided, but if a low SIL is all that is needed the system can be reduced in complexity in order to reduce unnecessary extra costs.

An exemplary Industrial Process Control System 10, comprises a workstation 12 a plurality of controllers 14 and a gateway 16. The workstation 12 communicates with the controllers 14 and the gateway 16 via Ethernet connections 18 to one or more control networks 13. Multiple Ethernet connections 18 provide redundancy to improve fault tolerance. The workstation 12 may be connected via a conventional Ethernet connection 11 to another external network 15.

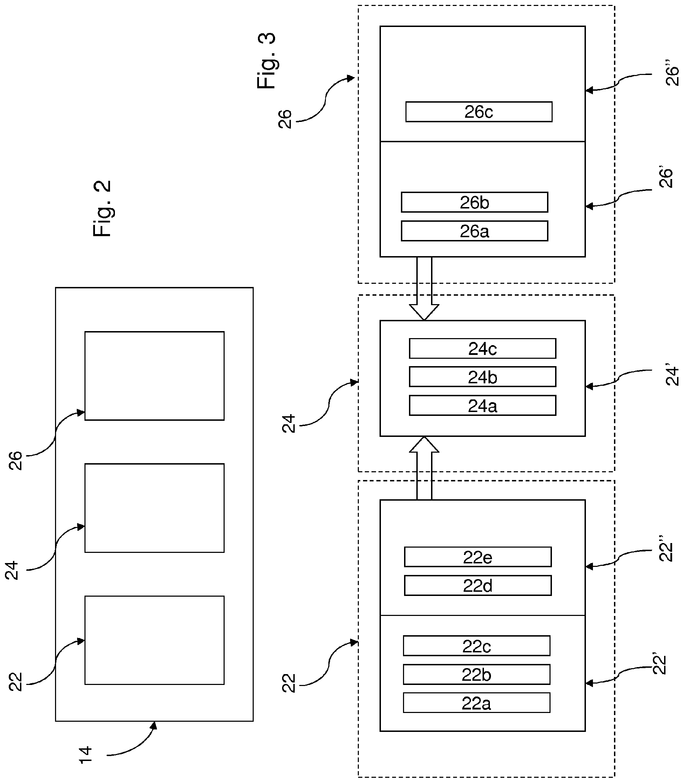

A controller 14 will now be described in more detail with reference to Figures 2 and 3.

Figure 2 illustrates a schematic diagram of the controller 14 comprising an input assembly 22, a processor assembly 24 and an output assembly 26. In this schematic illustration the input assembly 24 and output assembly 26 are on different I/O backplanes but they may equally well share a single I/O backplane.

Assemblies 22, 24, 26 are created from one or more I/O communications backplane portions which have three slots to accommodate up to three modules together with termination assemblies which have one two or three slots, and which interface to field sensors and transducers. A termination assembly may straddle two contiguous backplane portions. A module comprises a plug in card with multiple connectors for plugging onto an I/O communications backplane and a termination assembly.

It will be appreciated that having three slots in an I/O communications backplane portion is one design option and other design options with greater (or fewer) slots are possible without departing from the scope of the invention as defined in the appended claims.

Figure 3 illustrates a possible physical configuration of the controller 14. In this embodiment of the invention, the input assembly 22, output assembly 26 and processor assembly 24 are physically separated from one another by grouping the modules of different types onto separate I/O communications backplanes.

In the example shown, the input assembly 22 comprises two I/O communications backplane portions, 22', 22". The first backplane portion 22' has a triplex input termination assembly and three input modules 22a, 22b, 22c, the second backplane portion 22" has a duplex input termination assembly 22" and two input modules 22d, 22e. The processor assembly 24 comprises a single processor backplane portion 24' having three processor modules 24a, 24b and 24c. The output assembly 26 comprises two I/O backplane portions 26', 26". The first backplane portion 26' has a duplex output termination assembly with two output modules 26a, 26b and the second backplane portion 26" has a simplex output termination assembly with a single output module 26c.

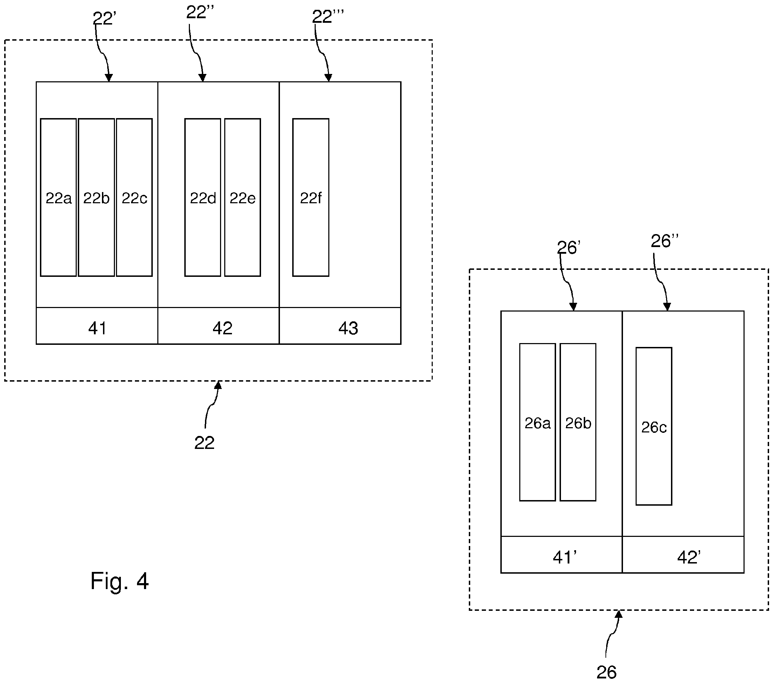

The flexibility of the input assembly 22, will now be described, in more detail with reference to Figure 4.

An input assembly 22 comprises one or more I/O backplane portions and termination assemblies 22' 22" 22'" etc. For example, a triplex portion 22' having three modules 22a, 22b, 22c might be used for high availability requirement SIL3 applications, a duplex portion 22" having two modules 22d, 22e might be provided for SIL3 fault tolerant applications and a simplex portion 22'" with a single module 22f might be provided for SIL3 failsafe applications. The termination assemblies may be provided with different types of field conditioning circuits. For example assembly 22' may be provided with a 24V DC field conditioning circuit 41 assembly 22" may be provided with a 120V DC field conditioning circuit 42 and assembly 22'" may be provided with a 4-20mA field conditioning circuit 43. Similarly possible configurations are shown for an output assembly 26. It will be appreciated that numerous configurations of I/O backplane portions and termination assemblies with various different numbers of modules and various different types of field conditioning circuits are possible and the invention is not limited to those shown in these examples.

Where an assembly provides more than one module for redundancy purposes it is possible to replace a failed module with a replacement module whilst the industrial process control system is operational which is also referred to herein as online replacement (ie replacement is possible without having to perform a system shutdown). Online replacement is not possible for a simplex assembly without interruption to the process. In this case various "hold last state" strategies may be acceptable or a sensor signal may also be routed to a different module somewhere else in the system.

The processor assembly configures a replacement processor module using data from a parallel module before the replacement module becomes active.

The field conditioning circuits 41, 42, 43 transform a signal received from a sensor to a desired voltage range, and distribute the signal to the input modules as required. Each field conditioning circuit 41, 42, 43 is also connected to field power and field return (or ground) which may be independently isolated on a channel by channel basis from all other grounds, depending on the configuration of the input termination assembly. Independent channel isolation is the preferred configuration because it is the most flexible. The field conditioning circuits 41, 42, 43 comprise simple non active parts and are not online replaceable.

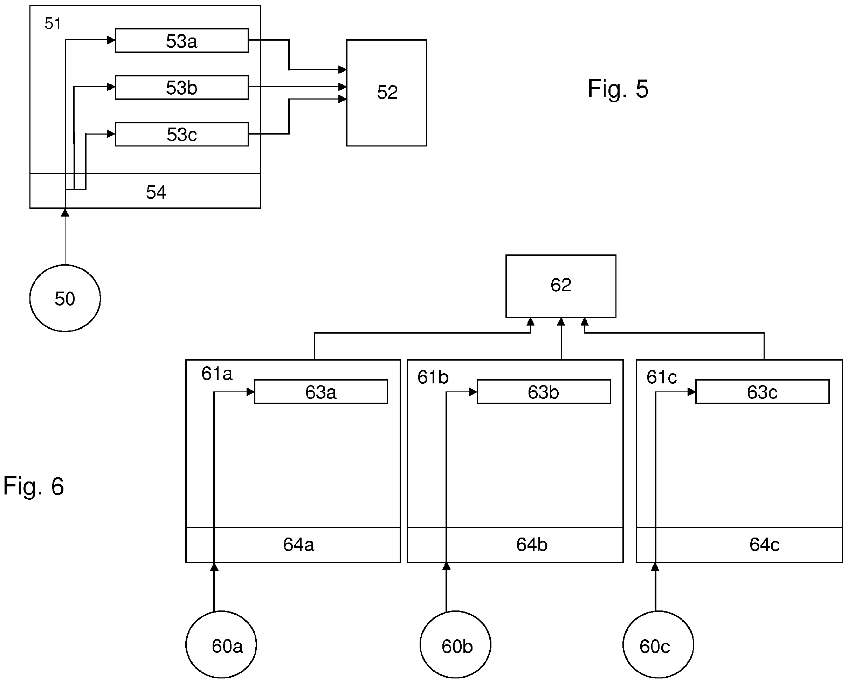

Figure 5 and Figure 6 illustrate the flexibility of the architecture described herein showing different configurations for a triplex system for generating a SIL3 signal with a high availability requirement. Referring to Figure 5, a three module input assembly 51 receives a signal from a sensor 50 via a field conditioning circuit in termination assembly 54. The field conditioning circuit 54 transforms the signal to a desired voltage range and distributes the signal to three replicated input modules 53a, 53b, 53c. Each input module processes the signal and the results are sent to a two out of three voter 52 to generate a result signal in dependence thereon.

Referring to Figure 6, replicated sensors 60a, 60b, 60c each send a signal to a respective simplex assemblies 61a, 61b, 61c via respective field conditioning circuits in termination assemblies 64a, 64b, 64c. Each input module 63a, 63b, 63c processes the signal and sends an output to a two out of three voter 62 to generate a signal in dependence thereon. It will be appreciated that many variations and configurations are possible in addition to those illustrated here.

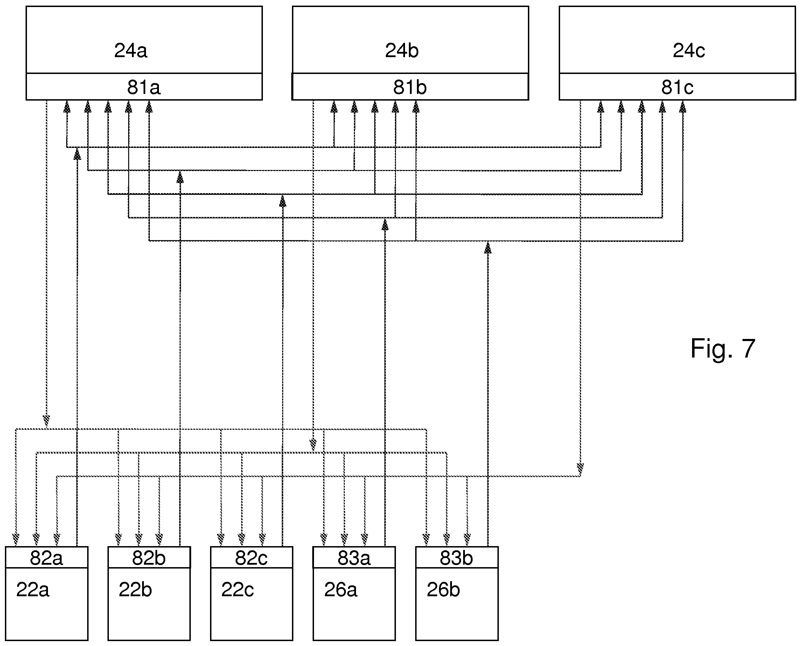

Referring now to Figure 7 an interconnection scheme in one embodiment of the invention will be described. The interconnection scheme comprises a topology which permits flexible system configuration to a desired level of redundancy. In configurations having more than one module per backplane portion the failure of a processor module 24a-24c or I/O module 22a-22c, 26a-26b does not affect communications links with any of the other elements of the system.

Each processor module 24a-24c possesses a single command output per I/O backplane bus, each of which can accommodate a large number of any type of I/O modules - 24 I/O modules per I/O backplane bus in the preferred embodiment of the invention. As an example, a command output is shown in Figure 7 connected to every I/O module 22a -22c and 26a-26b on a multi-drop I/O communications backplane.

Each I/O module 22a -22c, 26a-26b possesses a single response output with its own dedicated wire which is connected to every processor module 24a-24c on a processor I/O communications backplane 24.

This scheme provides three-to-many command busses combined with many-to-three response busses. The busses are unidirectional and as there is only one driver per bus there is no contention. A single fault will only result in communications loss from a single unit.

Each processor module 24a-24c comprises an application control processor which is connected to the backplane bus via an interface 81a-81c. Each input module 22a-22c is connected to the backplane bus via an interface 82a-82c and each output module 26a-26b is connected to the backplane bus by an interface 83a-83b.

In the preferred embodiment of the invention the interfaces are implemented using a field programmable gate array (FPGA). It will be appreciated that implementation of the interface using an FPGA is not central to the invention. The functions could equally well be implemented in an application specific integrated circuit (ASIC), or a general purpose microcomputer, for example, without departing from the scope of the invention as defined in the appended claims.

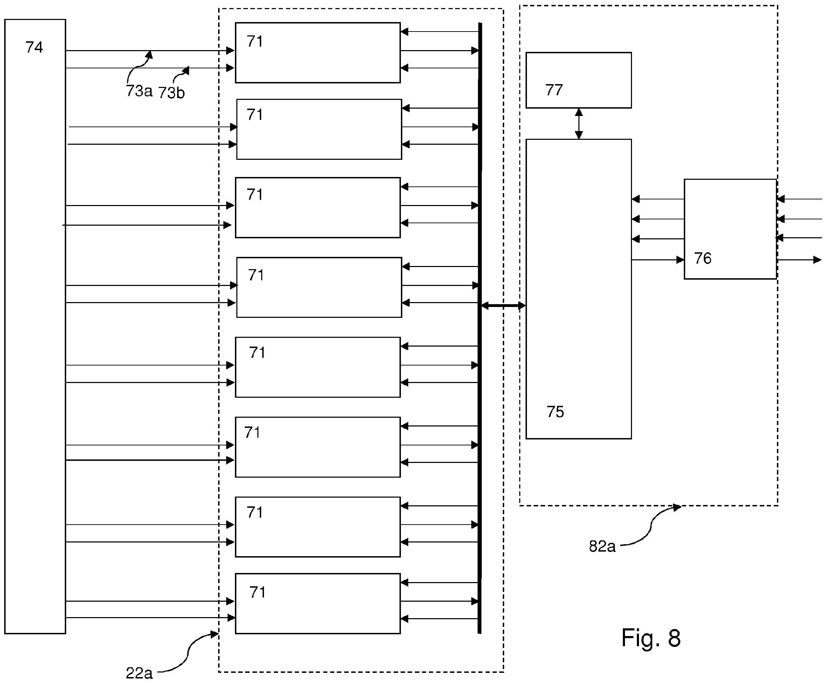

Figure 8 illustrates schematically an input module 22a and interface 82a.

An input module 22a comprises eight isolated channels 71. Each channel 71 receives primary sense signal 73a and secondary sense signal 73b from field conditioning circuits in a termination assembly 74. Each channel communicates with the FPGA 75 which interfaces to the I/O backplane (not shown) via a non-isolated backplane interface 76. Light emitting diodes (LEDs) 77 are used to indicate status of the module via red and green indicators.

It will be appreciated that having eight channels is one design option and other design options with greater (or fewer) channels are possible without departing from the scope of the invention as defined in the appended claims.

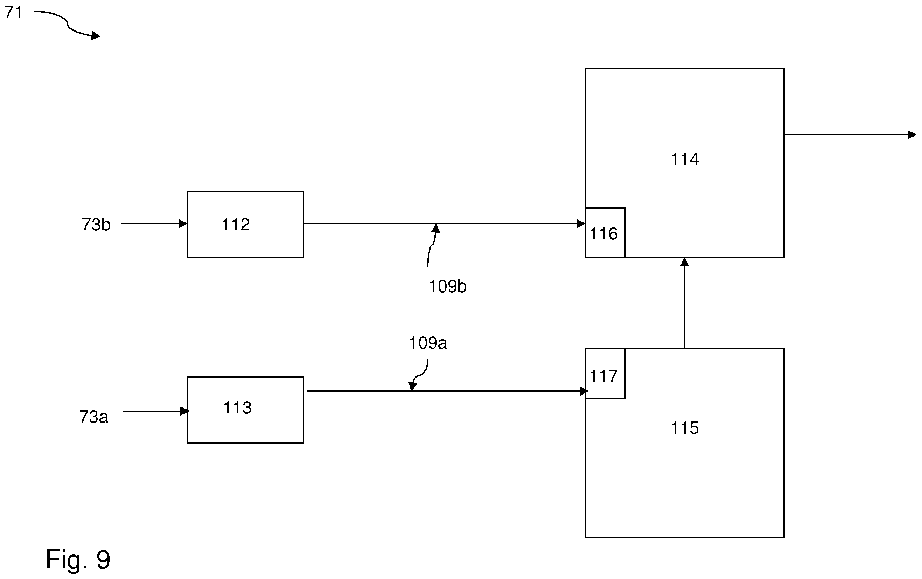

Figure 9 illustrates how two channels are arranged to measure primary sense signal 73a and secondary sense signal 73b. Use of a secondary channel allows faults in the termination assembly 74 and in the primary channel to be detected.

Primary sense signal 73a is connected to primary input circuit 113. Input circuit 113 sends an analogue output signal 109a to microcomputer 115 where it is converted by a sixteen bit resolution A/D converter 117 to a digital primary sense signal.

Secondary sense signal 73b is connected to secondary input circuit 112.. Input circuit 112 sends an analogue output signal 109b to microcomputer 114 where it is converted by a ten bit resolution A/D converter 116 to a digital secondary sense signal.

It will be appreciated that the precision of the A/D converters in the preferred embodiment is merely one design option and other design options with greater (or less) precision is possible without departing from the scope of the invention as defined in the appended claims.

Microcomputer 115 sends the digital primary sense signal to microcomputer 114 where together with the digital secondary sense signal it is sent to the FPGA 75 for transmission to the processor modules 26a-26c for analysis by the application control processor

Calibration coefficients for the input channels are stored locally in each microcomputer 114, 115. When the channels are calibrated a channel number is allocated to each channel and stored with calibration data. This aids in the detection of channel independence faults. The channel number is used as a seed to generate a cyclic redundancy check (CRC) code. Microprocessor 114 includes the code (or checksum) thus generated in a data packet together with the input data generated from signals 73a/73b. The data thus encoded is then sent to the processor modules 24a-24c. The processor module decodes the data and compares the received CRC code with a code generated from the received data using as a seed the channel number of the module from which the data was (supposedly) received. This is particularly helpful for detecting when data is received from the wrong channel for example due to cross channel interference. Although the data itself may not be corrupt calculating a CRC code using a CRC seed based on the expected channel number will result in a error being detected, Any data where an error is detected may be disregarded.

In a similar manner, when the output channels 26a-26b are calibrated a channel number is allocated to each channel. Application software in the processor module 24a-24c encodes output command data using a CRC checksum based on seed which is dependent upon the destination channel number and which provides a system wide unique code. Again if the data is detected as being corrupted then it may be disregarded.

Each output module 26a-26b is responsible for driving a plurality of output channels. In the preferred embodiment each output module receives a plurality of commands from a plurality of processor module 24a-24c respectively. The interface 83a-83b at each output module must determine how to drive the output channels in dependence upon the received commands which may or may not be identical to one another due to errors.

Firstly the interface (which is an FPGA in the preferred embodiment of the invention) determines how many processing modules are detected and active.

If there are three processors that are detected as being present and active, then the FPGA will require two out of the three commands to agree and be received within a predetermined time window in order to accept the new command.

If there are two processors that are detected as being present and active, then the FPGA will require both of them to agree and be received within a predetermined time window in order to accept the new command.

If there is only a single processor that is detected as being present and active then any valid command that is received in the predetermined time window will be accepted.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention as defined in the appended claims.

## Claims

1. An apparatus for industrial process control comprising a plurality of processor assemblies (24) and a plurality of second assemblies (22, 26), each of the second assemblies comprising an input or output assembly (22, 26), wherein
the plurality of processor assemblies (24) include a source assembly and the plurality of second assemblies (22, 26) include a destination assembly,
or
the plurality of processor assemblies (24) include a destination assembly and the plurality of second assemblies (22, 26) include a source assembly;
wherein the source assembly and the destination assembly are arranged for communication with one another;
wherein a first one of the second assemblies (22, 26) is one of the source assembly or the destination assembly;
wherein the first one of the second assemblies (22, 26) comprises an input channel (71) or an output channel, the input or output channel being allocated a respective input or output channel number; and
wherein the source assembly transmitting data to the destination assembly is arranged to include a checksum which is calculated using a seed which is uniquely dependent upon the first one of the second assemblies (22, 26), the seed comprising the input or output channel number of the first one of the second assemblies.

2. The apparatus of claim 1, wherein the first one of the second assemblies (22, 26) comprises a plurality of input or output channels (71), and an input or output channel number is allocated to each of the plurality of input or output channels (71).

3. The apparatus of claim 1 or 2, in which the source assembly is a processor assembly (24) and the destination assembly is one of the second assemblies (22, 26).

4. The apparatus of claim 1 or 2, in which the source assembly is an input assembly (22) and the destination assembly is a processor assembly (24).

5. The apparatus of claim 1 or 2, in which the destination assembly receiving data from the source assembly is arranged to compare the received checksum with a calculated checksum calculated using a seed which is uniquely dependent upon an expected source or destination assembly (22, 26) and to discard received data where the received checksum does not match the calculated checksum.

6. The apparatus of claim 5, in which the source assembly is a processor assembly (24) and the destination assembly is one of the second assemblies (22, 26).

7. The apparatus of claim 5, in which the source assembly is an input assembly (22) and the destination assembly is a processor assembly (24).

8. The apparatus of claim 1 or 2, in which the input or output channel number is allocated when an input or output channel (71) is configured.

9. The apparatus of claim 1 or 2 in which the checksum is a cyclic redundancy code.

10. The apparatus of claim 5, in which the source assembly is a processor assembly (24) and the destination assembly is an output assembly (26), and the output assembly (26) is arranged to determine the number of processors which are connected and active, and in the event that three processors are connected and active and perform identical functions, and the output assembly (26) receives data from a first and second processor, then if first data from the first processor and second data from the second processor agree the data is considered valid otherwise the data is considered invalid.

11. The apparatus of claim 10, in which in the event that two processors are connected and active and perform identical functions and the output assembly (26) receives data from a first and second processor, then if first data from the first processor and second data from the second processor agree the data is considered valid.

12. The apparatus of claim 11, in which the first data and second data must arrive within a predetermined time frame to be considered valid otherwise the data is considered invalid.

13. A method for industrial process control for use with a plurality of processor assemblies (24) and a plurality of second assemblies (22, 26), each of the second assemblies comprising an input or output assembly (22, 26), wherein
the plurality of processor assemblies (24) include a source assembly and the plurality of second assemblies (22, 26) include a destination assembly, or
the plurality of processor assemblies (24) include a destination assembly and the plurality of second assemblies (22, 26) include a source assembly;
wherein the source assembly and the destination assembly are arranged for communication with one another;
wherein a first one of the second assemblies (22, 26) is one of the source assembly or the destination assembly, and wherein the first one of the second assemblies (22, 26) comprises an input channel (71) or an output channel, the input or output channel being allocated a respective input or output channel number, the method comprising:
at the source assembly transmitting data to the destination assembly, the data including a checksum which is calculated using a seed which is uniquely dependent upon the first one of the second assemblies (22, 26), the seed comprising the input or output channel number of the first one of the second assemblies.

14. The method of claim 13, wherein the first one of the second assemblies (22, 26) comprises a plurality of input or output channels (71), and an input or output channel number is allocated to each of the plurality of input or output channels (71).

## Patentansprüche

1. Vorrichtung zur industriellen Prozesssteuerung, umfassend eine Vielzahl von Prozessorbaugruppen (24) und eine Vielzahl von zweiten Baugruppen (22, 26), wobei jede der zweiten Baugruppen eine Eingabe- oder Ausgabebaugruppe (22, 26) umfasst,
worin
die Vielzahl von Prozessorbaugruppen (24) eine Quellbaugruppe einschließt und die Vielzahl von zweiten Baugruppen (22, 26) eine Zielbaugruppe einschließt, oder
die Vielzahl von Prozessorbaugruppen (24) eine Zielbaugruppe einschließt und die Vielzahl von zweiten Baugruppen (22, 26) eine Quellbaugruppe einschließt;
worin die Quellbaugruppe und die Zielbaugruppe zur Kommunikation miteinander eingerichtet sind;
worin eine erste der zweiten Baugruppen (22, 26) eine der Quellbaugruppe oder der Zielbaugruppe ist;
worin die erste der zweiten Baugruppen (22, 26) einen Eingabekanal (71) oder einen Ausgabekanal umfasst, wobei dem Eingabe- oder Ausgabekanal eine entsprechende Eingabe- oder Ausgabekanalnummer zugewiesen ist; und
worin die Quellbaugruppe, die Daten zur Zielbaugruppe überträgt, dafür eingerichtet ist, eine Prüfsumme einzuschließen, die unter Verwendung eines Startwerts berechnet wird, der eindeutig von der ersten der zweiten Baugruppen (22, 26) abhängig ist, wobei der Startwert die Eingabe- oder Ausgabekanalnummer der ersten der zweiten Baugruppen umfasst.

2. Die Vorrichtung nach Anspruch 1, worin die erste der zweiten Baugruppen (22, 26) eine Vielzahl von Eingabe- oder Ausgabekanälen (71) umfasst und jedem aus der Vielzahl von Eingabe- oder Ausgabekanälen (71) eine Eingabe- oder Ausgabekanalnummer zugewiesen ist.

3. Vorrichtung nach Anspruch 1 oder 2, bei der die Quellbaugruppe eine Prozessorbaugruppe (24) ist und die Zielbaugruppe eine der zweiten Baugruppen (22, 26) ist.

4. Vorrichtung nach Anspruch 1 oder 2, bei der die Quellbaugruppe eine Eingabebaugruppe (22) ist und die Zielbaugruppe eine Prozessorbaugruppe (24) ist.

5. Vorrichtung nach Anspruch 1 oder 2, bei der die Zielbaugruppe, die Daten von der Quellbaugruppe empfängt, dafür eingerichtet ist, die empfangene Prüfsumme mit einer berechneten Prüfsumme zu vergleichen, die unter Verwendung eines Startwerts berechnet wurde, der eindeutig von einer erwarteten Quell- oder Zielbaugruppe (22, 26) abhängig ist, und empfangene Daten zu verwerfen, wenn die empfangene Prüfsumme nicht mit der berechneten Prüfsumme übereinstimmt.

6. Vorrichtung nach Anspruch 5, bei der die Quellbaugruppe eine Prozessorbaugruppe (24) ist und die Zielbaugruppe eine der zweiten Baugruppen (22, 26) ist.

7. Vorrichtung nach Anspruch 5, bei der die Quellbaugruppe eine Eingabebaugruppe (22) und die Zielbaugruppe eine Prozessorbaugruppe (24) ist.

8. Vorrichtung nach Anspruch 1 oder 2, bei der die Eingabe- oder Ausgabekanalnummer zugewiesen wird, wenn ein Eingabe- oder Ausgabekanal (71) konfiguriert wird.

9. Vorrichtung nach Anspruch 1 oder 2, bei der die Prüfsumme ein zyklischer Redundanzcode ist.

10. Die Vorrichtung nach Anspruch 5, bei der die Quellbaugruppe eine Prozessorbaugruppe (24) ist und die Zielbaugruppe eine Ausgabebaugruppe (26) ist und die Ausgabebaugruppe (26) dafür eingerichtet ist, die Anzahl der Prozessoren zu bestimmen, die verbunden und aktiv sind, und in dem Fall, dass drei Prozessoren verbunden und aktiv sind und identische Funktionen durchführen und die Ausgabebaugruppe (26) Daten von einem ersten und einem zweiten Prozessor empfängt, dann werden, wenn erste Daten vom ersten Prozessor und zweite Daten vom zweiten Prozessor übereinstimmen, die Daten als gültig betrachtet, andernfalls werden die Daten als ungültig betrachtet.

11. Vorrichtung nach Anspruch 10, bei der in dem Fall, dass zwei Prozessoren verbunden und aktiv sind und identische Funktionen durchführen und die Ausgabebaugruppe (26) Daten von einem ersten und einem zweiten Prozessor empfängt, dann, wenn erste Daten vom ersten Prozessor und zweite Daten vom zweiten Prozessor übereinstimmen, die Daten als gültig betrachtet werden.

12. Vorrichtung nach Anspruch 11, bei der die ersten Daten und die zweiten Daten innerhalb eines vorbestimmten Zeitrahmens eintreffen müssen, um als gültig angesehen zu werden, andernfalls werden die Daten als ungültig betrachtet.

13. Verfahren zur industriellen Prozesssteuerung zur Verwendung mit einer Vielzahl von Prozessorbaugruppen (24) und einer Vielzahl von zweiten Baugruppen (22, 26), wobei jede der zweiten Baugruppen eine Eingabe- oder Ausgabebaugruppe (22, 26) umfasst,
worin
die Vielzahl von Prozessorbaugruppen (24) eine Quellbaugruppe einschließt und die Vielzahl von zweiten Baugruppen (22, 26) eine Zielbaugruppe einschließt, oder
die Vielzahl von Prozessorbaugruppen (24) eine Zielbaugruppe einschließt und die Vielzahl von zweiten Baugruppen (22, 26) eine Quellbaugruppe einschließt;
worin die Quellbaugruppe und die Zielbaugruppe zur Kommunikation miteinander eingerichtet sind;
worin eine erste der zweiten Baugruppen (22, 26) eine der Quellbaugruppe oder der Zielbaugruppe ist und worin die erste der zweiten Baugruppen (22, 26) einen Eingabekanal (71) oder einen Ausgabekanal umfasst, wobei dem Eingabe- oder Ausgabekanal eine entsprechende Eingabe- oder Ausgabekanalnummer zugewiesen ist, wobei das Verfahren umfasst:
in der Quellbaugruppe, die Daten zur Zielbaugruppe überträgt, erfolgendes Einschließen einer Prüfsumme in den Daten, die unter Verwendung eines Startwerts berechnet wird, der eindeutig von der ersten der zweiten Baugruppen (22, 26) abhängig ist, wobei der Startwert die Eingabe- oder Ausgabekanalnummer der ersten der zweiten Baugruppen umfasst.

14. Verfahren nach Anspruch 13, worin die erste der zweiten Baugruppen (22, 26) eine Vielzahl von Eingabe- oder Ausgabekanälen (71) umfasst und jedem aus der Vielzahl von Eingabe- oder Ausgabekanälen (71) eine Eingabe- oder Ausgabekanalnummer zugewiesen wird.

## Revendications

1. Appareil pour une commande de processus industriel, comprenant une pluralité d'assemblages de processeur (24) et une pluralité de seconds assemblages (22, 26), chacun des seconds assemblages comprenant un assemblage d'entrée ou de sortie (22, 26) ;
dans lequel
la pluralité d'assemblages de processeur (24) inclut un assemblage de source et la pluralité de seconds assemblages (22, 26) inclut un assemblage de destination ; ou
la pluralité d'assemblages de processeur (24) inclut un assemblage de destination et la pluralité de seconds assemblages (22, 26) inclut un assemblage de source ;
dans lequel l'assemblage de source et l'assemblage de destination sont agencés de manière à ce qu'ils communiquent l'un avec l'autre ;
dans lequel un premier des seconds assemblages (22, 26) est soit l'assemblage de source, soit l'assemblage de destination ;
dans lequel le premier des seconds assemblages (22, 26) comprend un canal d'entrée (71) ou un canal de sortie, le canal d'entrée ou de sortie se voyant attribuer un numéro de canal d'entrée ou de sortie respectif ; et
dans lequel l'assemblage de source qui transmet des données à l'assemblage de destination est agencé de manière à ce que ces données incluent un total de contrôle qui est calculé en utilisant une amorce qui dépend de façon unique du premier des seconds assemblages (22, 26), l'amorce comprenant le numéro de canal d'entrée ou de sortie du premier des seconds assemblages.

2. Appareil selon la revendication 1, dans lequel le premier des seconds assemblages (22, 26) comprend une pluralité de canaux d'entrée ou de sortie (71), et un numéro de canal d'entrée ou de sortie est attribué à chacun de la pluralité de canaux d'entrée ou de sortie (71).

3. Appareil selon la revendication 1 ou 2, dans lequel l'assemblage de source est un assemblage de processeur (24) et l'assemblage de destination est l'un des seconds assemblages (22, 26).

4. Appareil selon la revendication 1 ou 2, dans lequel l'assemblage de source est un assemblage d'entrée (22) et l'assemblage de destination est un assemblage de processeur (24).

5. Appareil selon la revendication 1 ou 2, dans lequel l'assemblage de destination qui reçoit des données en provenance de l'assemblage de source est agencé de manière à ce qu'il compare le total de contrôle reçu avec un total de contrôle calculé qui est calculé en utilisant une amorce qui dépend de façon unique d'un assemblage de source ou de destination attendu (22, 26) et de manière à ce qu'il mette à l'écart des données reçues pour lesquelles le total de contrôle reçu ne coïncide pas avec le total de contrôle calculé.

6. Appareil selon la revendication 5, dans lequel l'assemblage de source est un assemblage de processeur (24) et l'assemblage de destination est l'un des seconds assemblages (22, 26).

7. Appareil selon la revendication 5, dans lequel l'assemblage de source est un assemblage d'entrée (22) et l'assemblage de destination est un assemblage de processeur (24).

8. Appareil selon la revendication 1 ou 2, dans lequel le numéro de canal d'entrée ou de sortie est attribué lorsqu'un canal d'entrée ou de sortie (71) est configuré.

9. Appareil selon la revendication 1 ou 2, dans lequel le total de contrôle est un code de redondance cyclique.

10. Appareil selon la revendication 5, dans lequel l'assemblage de source est un assemblage de processeur (24) et l'assemblage de destination est un assemblage de sortie (26), et l'assemblage de sortie (26) est agencé de manière à ce qu'il détermine le nombre de processeurs qui sont connectés et actifs, et dans le cas où trois processeurs sont connectés et actifs et réalisent des fonctions identiques et où l'assemblage de sortie (26) reçoit des données en provenance d'un premier et d'un second processeur, alors si des premières données en provenance du premier processeur et des secondes données en provenance du second processeur se correspondent, les données sont considérées comme étant valides et sinon, les données sont considérées comme étant invalides.

11. Appareil selon la revendication 10, dans lequel, dans le cas où deux processeurs sont connectés et actifs et réalisent des fonctions identiques et où l'assemblage de sortie (26) reçoit des données en provenance d'un premier et d'un second processeur, alors si des premières données en provenance du premier processeur et des secondes données en provenance du second processeur se correspondent, les données sont considérées comme étant valides.

12. Appareil selon la revendication 11, dans lequel les premières données et les secondes données doivent arriver à l'intérieur d'une trame temporelle prédéterminée pour qu'elles soient considérées comme étant valides et sinon, les données sont considérées comme étant invalides.

13. Procédé pour une commande de processus industriel, destiné à être utilisé avec une pluralité d'assemblages de processeur (24) et une pluralité de seconds assemblages (22, 26), chacun des seconds assemblages comprenant un assemblage d'entrée ou de sortie (22, 26) ;
dans lequel la pluralité d'assemblages de processeur (24) inclut un assemblage de source et la pluralité de seconds assemblages (22, 26) inclut un assemblage de destination ; ou
la pluralité d'assemblages de processeur (24) inclut un assemblage de destination et la pluralité de seconds assemblages (22, 26) inclut un assemblage de source ;
dans lequel l'assemblage de source et l'assemblage de destination sont agencés de manière à ce qu'ils communiquent l'un avec l'autre ;
dans lequel un premier des seconds assemblages (22, 26) est soit l'assemblage de source, soit l'assemblage de destination ; et dans lequel le premier des seconds assemblages (22, 26) comprend un canal d'entrée (71) ou un canal de sortie, le canal d'entrée ou de sortie se voyant attribuer un numéro de canal d'entrée ou de sortie respectif; le procédé comprenant :
au niveau de l'assemblage de source qui transmet des données à l'assemblage de destination, inclure dans les données un total de contrôle qui est calculé en utilisant une amorce qui dépend de façon unique du premier des seconds assemblages (22, 26), l'amorce comprenant le numéro de canal d'entrée ou de sortie du premier des seconds assemblages.

14. Procédé selon la revendication 13, dans lequel le premier des seconds assemblages (22, 26) comprend une pluralité de canaux d'entrée ou de sortie (71), et un numéro de canal d'entrée ou de sortie est attribué à chacun de la pluralité de canaux d'entrée ou de sortie (71).
